**Europäisches Patentamt**

**European Patent Office**

**Office européen des brevets**

(19)

(11) **EP 1 609 519 A1**

(12) **EUROPEAN PATENT APPLICATION**
published in accordance with Art. 158(3) EPC

(43) Date of publication:
**28.12.2005 Bulletin 2005/52**

(51) Int Cl.⁷: **B01D 39/20**, C04B 38/00

(21) Application number: **04710519.2**

(86) International application number:
**PCT/JP2004/001464**

(22) Date of filing: **12.02.2004**

(87) International publication number:
**WO 2004/087294 (14.10.2004 Gazette 2004/42)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **31.03.2003 JP 2003094860**

(71) Applicant: **NGK INSULATORS, LTD.
Nagoya-shi, Aichi 467-8530 (JP)**

(72) Inventor: **BABA, Tatsuo, NGK Insulators, Ltd.
Nagoya-shi, Aichi 4678530 (JP)**

(74) Representative: **TBK-Patent
Bavariaring 4-6
80336 München (DE)**

(54) **BASE FOR HONEYCOMB FILTER, METHOD FOR PRODUCING SAME AND HONEYCOMB FILTER**

(57)    A base 1 for a honeycomb filter of the present invention includes: a ceramic porous body having a large number of fine pores, and a plurality of cells 3 separated from each other by partition walls 4 and to serve as fluid passages. 50% pore diameter ($d_{50}$) of the ceramic porous body is within the range from 8.5 to 13 $\mu$m, and the partition walls 4 separating the plurality of cells have an average surface roughness of 3.0 to 5.5 $\mu$m.

FIG.1

# EP 1 609 519 A1

**Description**

Technical Field

The present invention relates to a honeycomb filter, a base for a honeycomb filter, and a production method thereof. Particularly, the present invention relates to a honeycomb filter excellent in impurity-removing performance and having high fluid-permeation amount (that is, treatment capacity), a base for a honeycomb filter suitably usable for production of such a honeycomb filter, and a production method thereof.

Background Art

There has recently been used, in wide fields such as fields of water treatment, medicine, food, etc., a filter using a ceramic porous body as a filtering material in order to remove impurities such as suspended matter, bacteria, and dust coexisting in fluid (liquid, gas).

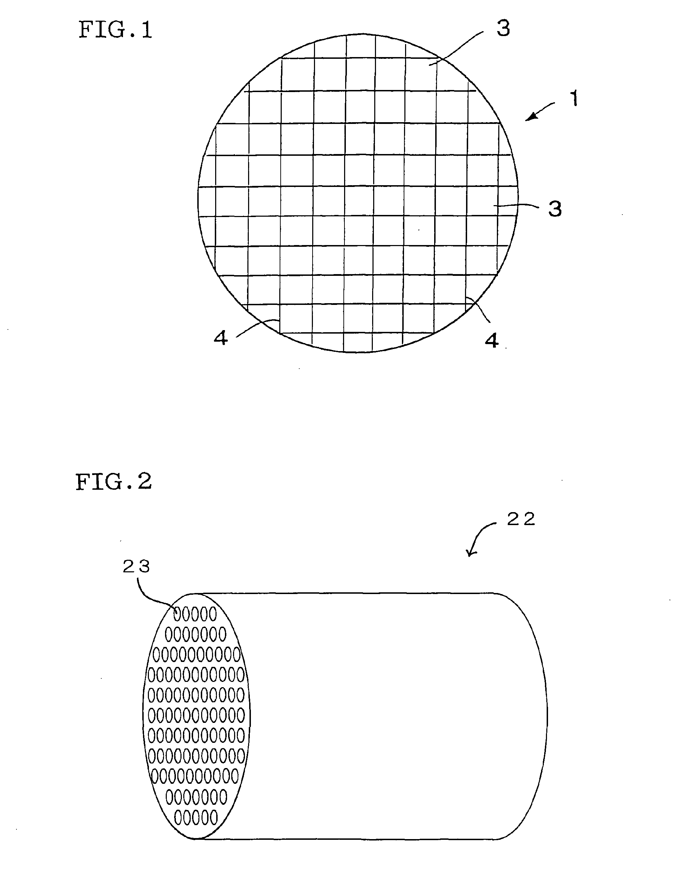

As such a filter, there has widely been used, for example, a honeycomb filter 22, as shown in Fig. 2, constituted by a ceramic porous body with a large number of pores and having a plurality of cells 23 separated from each other by partition walls and to serve as fluid passages (hereinbelow, such a shape is referred to as a "honeycomb shape").

In such a honeycomb filter described above, when fluid to be treated is supplied into the plurality of cells, the fluid permeates through a ceramic porous body constituting the honeycomb filter and flow out of the peripheral surface. At that time, suspended matter or the like is removed. Therefore, purified fluid can be collected by housing the honeycomb filter in a case in the state that the peripheral surface side and the opening end face side is fluid-tightly isolated from each other by a sealing material (e.g., O-ring).

Most honeycomb structures employ a structure having a base constituted by a ceramic porous body having a large number of fine pores and separated from each other by partition walls, and a filtration membrane constituted by a porous body having pores having smaller average pore diameter than those of the base and formed on a surface of the partition walls separating a plurality of cells from each other (e.g., JP-A-2001-260117 and JP-A-2001-340718).

In the above structure, impurity-removing performance is secured by making the average pore diameter of the filtration membrane smaller than a particle diameter of impurities (about 0.01 to 1.0 μm), while it is possible to lower the flow-resistance, thereby increasing fluid-permeation amount and improving treatment capacity by making the average pore diameter of the base larger than that of the filtration membrane (about 1 to 100 μm). That is, constitution of a honeycomb filter having high capacity can be achieved by making the average pore diameter of the base as large as possible.

However, in the case of forming a filtration membrane having an average pore diameter smaller than that of the base on a surface of partition walls separating a plurality of cells from each other in a base having a large average pore diameter, there are the following problems.

That is, upon producing a honeycomb filter, it is general to form a filtration membrane by applying slurry containing aggregate particles on a surface of partition walls of a base (i.e., inner walls of cells) to obtain a film-forming body, which is then dried and fired. When a filtration membrane having a smaller average pore diameter is formed, slurry containing aggregate particles having a smaller average particle diameter is used. However, if slurry containing aggregate particles having a smaller average particle diameter is applied on a surface of partition walls of a base (i. e., inner walls of cells) having a large average pore diameter, slurry does not stay only on a surface of the partition walls of the base and permeates into the inside of the pores of the base to block up the pores of the base. Therefore, a problem is that increase in fluid-permeation amount and improvement in treatment capacity cannot be achieved as much as expected.

As a method of avoiding the above problem, consideration has been given to a method in which an intermediate membrane of a porous body having an average pore diameter between those of the base and the filtration membrane is formed between the base and the filtration membrane. According to this method, since aggregate particles in slurry are trapped on the surface of the intermediate membrane, aggregate particles are inhibited from permeating into pores of the base. However, total thickness of the filtration membrane and the intermediate membrane is large, and thereby increasing flow-resistance of fluid in this portion. Therefore, even if this method is employed, it is impossible to increase fluid-permeation amount and improve treatment capacity of a filter.

Disclosure of the Invention

The present invention has been made in view of these conventional problems, and there is provided a honeycomb filter having advantageous effects of large fluid-permeation amount and high treatment capacity. To be concrete, there is provided a base for a honeycomb filter, the base being suitably usable for production of such a honeycomb filter, and a method for producing the base.

The present inventors earnestly studied to solve the above problems and found that the aforementioned problems can be solved by specifying 50% pore diameter ($d_{50}$) of a ceramic porous body constituting a base for a honeycomb filter to be within the range from 8.5 to 13 µm and specifying average surface roughness of partition walls separating a plurality of cells from each other to be within the range from 3.0 to 5.5 µm. Thus, the present invention has been accomplished. That is, according to the present invention, there are provided the following base for a honeycomb filter, method for producing the base, and honeycomb filter.

[1] A base for a honeycomb filter comprising:

a ceramic porous body having a number of fine pores, and
a plurality of cells separated from each other by partition walls, the cells functioning as fluid passages;

wherein 50% pore diameter ($d_{50}$) of said ceramic porous body is within the range from 8.5 to 13 µm, and the partition walls separating the plurality of cells have an average surface roughness of 3.0 to 5.5 µm,
where "50% pore diameter ($d_{50}$)" is a pore diameter measured by a method of mercury penetration and calculated from a pressure when a cumulative volume of mercury press-fitted into the porous body is 50% of the volume of the whole pores of the porous body.

[2] A method for producing a base for a honeycomb filter, comprising the steps of:

mixing and kneading aggregate particles and water to obtain clay,
forming the clay in a honeycomb shape having a plurality of cells separated from each other by partition walls, the cells functioning as fluid passages,
drying the clay in a honeycomb shape to obtain a honeycomb formed body, and
firing the honeycomb formed body to obtain the base for the honeycomb filter;

wherein 50% particle diameter ($D_{50}$) of the aggregate particles is within the range of 50 to 70 µm, and the 50% particle diameter ($D_{50}$) with 25% particle diameter ($D_{25}$) and 75% particle diameter ($D_{75}$) satisfies the relation of the following formulae (1) and (2):

$$0.4 \leq D_{25}/D_{50} \tag{1}$$

$$D_{75}/D_{50} \leq 1.4 \tag{2}$$

where "x% particle diameter ($D_x$)" is a particle diameter measured by a sieving method, the particle diameter being at the point where cumulative mass of powder meets x% of the whole mass on a particle size distribution curve given from a relation between a mesh diameter and mass of powder remaining on the sieve.

[3] A method for producing a base for a honeycomb filter according to Claim 2, wherein the 50% particle diameter ($D_{50}$) of the aggregate particles with thickness (W) of the partition walls of the base for the honeycomb filter satisfies the following formula (3):

$$D_{50}/W \leq 0.12 \tag{3}$$

[4] A honeycomb filter comprising:

a base for the honeycomb filter according to the above [1]
an intermediate membrane comprising a porous body having smaller 50% pore diameter ($d_{50}$) than the ceramic porous body constituting said base, the intermediate membrane being formed on a surface of the partition walls separating the plurality of cells from each other of the base for the honeycomb filter, and
a filtration membrane comprising a porous body having smaller 50% pore diameter ($d_{50}$) than the porous body constituting the intermediate membrane, the filtration membrane being formed on a surface of the intermediate membrane.

Brief Description of the Drawings

Fig. 1 is a front view schematically showing an embodiment of a base for a honeycomb filter*and showing a structure viewed from a cell-opening end face side.
Fig. 2 is a perspective view schematically showing an embodiment of a honeycomb filter.

Best Mode for Carrying out the Invention

Upon developing a honeycomb filter of the present invention, the present inventors made a study on a cause of increasing flow-resistance of fluid in a portion of intermediate membrane because of large total thickness of a filtration membrane and an intermediate membrane in a method in which an intermediate membrane of a porous body having an average pore diameter between those of the base and the filtration membrane is formed between the base and the filtration membrane. As a result, it was found out that a thick intermediate membrane has conventionally been formed to make a surface of the intermediate membrane as flat and smooth as possible.
It is required to form a surface of an intermediate membrane, which serves as a foundation layer for a filtration layer as flat and smooth as possible in order to inhibit generation of a film defect in the filtration membrane. However, due to the large rough unevenness of a surface of partition walls of a conventional base, it was necessary to fill up the unevenness of partition walls in the first place upon forming an intermediate layer. Then, a surface of the intermediate layer is made flat and smooth. Therefore, the intermediate layer had to be thick.
Therefore, in the present invention, 50% pore diameter ($d_{50}$) of a ceramic porous body constituting a base for a honeycomb filter is specified to 8.5 to 13 $\mu$m, and average surface roughness of partition walls separating a plurality of cells from each other is specified to 3.0 to 5.5 $\mu$m.
This makes a surface of partition walls of a base relatively smooth and flat to reduce unevenness. Therefore, upon forming an intermediate membrane, filling up of unevenness of partition walls is not necessary, and the surface can be made flat and smooth even if the intermediate layer is thin. Accordingly, with inhibiting generation of a defect of a filtration membrane, the total thickness of the filtration membrane and the intermediate membrane can be reduced, which enables to reduce flow-resistance of fluid in this portion. That is, fluid-permeation amount is increased, and treatment capacity can be improved.
Hereinbelow will specifically be described embodiments of a base for a honeycomb filter, a method for producing the base, and a honeycomb filter.

(1) Base for a honeycomb filter

A base for a honeycomb filter of the present invention is constituted by a ceramic porous body having a large number of pores and has a plurality of cells 3 which are separated from each other by partition walls 4 and functions as fluid passages as, for example, the base 1 for a honeycomb filter shown in Fig. 1.
There is no particular limitation to shapes of the base for a honeycomb filter (hereinbelow sometimes referred to simply as "base") as long as it is a honeycomb shape having a plurality of cells (through holes) to function as fluid passages as described above. Examples of the whole shape include a cylindrical shape as shown in Fig. 1, a quadrangular prism, and a triangular prism. Examples of the cell shape (cell shape in a section perpendicular to a direction of cell formation) include a rectangle as shown in Fig. 1, a circle, a hexagon, and a triangle.
A base is generally constituted by ceramic because ceramic has high reliability because of superior physical strength and durability in comparison with organic polymer, ceramic is hardly deteriorated even by washing with acid or alkali because of high corrosion resistance, and the average pore diameter which determines filtration ability can be accurately controlled. There is no particular limitation to kinds of ceramic, and examples of ceramic include cordierite, mullite, alumina, powder of potsherd, aluminum titanate, lithium aluminum silicate, silicon carbide, silicon nitride, and a mixture thereof.
A base is constituted by a ceramic porous body having a large number of pores. In the present invention, 50% pore diameter ($d_{50}$) is necessarily within the range from 8.5 to 13 $\mu$m. When 50% pore diameter ($d_{50}$) is below the above range, flow-resistance increases when fluid permeates inside the base, which reduces fluid-permeation amount and lowers mechanical strength of the base, which is not preferable. When 50% pore diameter ($d_{50}$) is above the above range, mechanical strength of the base is lowered, which is not preferable.
Incidentally, "50% pore diameter ($d_{50}$)" in the present invention means a pore diameter measured by a method of mercury penetration and calculated from a pressure when a cumulative volume of mercury press-fitted into the porous body is 50% of the capacity of the hole pores of the porous body. A method of mercury penetration is a method for measuring a pore diameter with the following formula (4) as a principle formula. To be concrete, when mercury is press-fitted into a dried porous body with pressure being gradually raised, mercury is press-fitted in order from pores having larger diameters, and a cumulative volume of mercury increases. When all pores are filled with mercury finally, the cumulative volume reaches equilibrium volume (which corresponds to the whole pore volume of the porous body). In the present invention, a pore diameter d calculated from a pressure P when a cumulative volume of mercury press-fitted into the porous body reached 50% of the capacity of the whole pores of the porous body was defined as "50% pore diameter ($d_{50}$)". In this measurement method, "50% pore diameter ($d_{50}$)" is a so-called average pore diameter.

$$d = -\gamma \times \cos\theta / P \qquad (4)$$

(where d represents pore diameter, $\gamma$ represents surface tension at liquid-air interface, $\theta$ represents contact angle, and P represents pressure)

In a base for a honeycomb filter of the present invention, it is necessary that partition walls separating a plurality of cells from each other have an average surface roughness within the range from 3.0 to 5.5 $\mu$m. When the average surface roughness is below the above range, a surface of partition walls is extremely flat and smooth, and an intermediate layer is prone to exfoliate from the surface of partition walls when the intermediate layer is formed on a surface of partition walls. On the other hand, when the average surface roughness is above the range, the partition walls have coarse surface having large unevenness. Therefore, when an intermediate is formed, it is necessary to employ a thick intermediate membrane in order to make a surface of the intermediate membrane flat and smooth besides filling up of the unevenness of the partition walls in the first place. That is, since flow-resistance of fluid increases in the intermediate membrane portion, fluid-permeation amount of a resultant honeycomb filter decreases, and treatment capacity is lowered.

Incidentally, "surface roughness" in the present invention means surface roughness measured according to JIS B0601 "Surface Roughness - Definition and Indication". To be concrete, a standard length of a roughness curve was taken out in the direction of an average line, a surface roughness curve having the standard length was folded back based on the average line, and a value obtained by dividing an area surrounded by the surface roughness curve and the average line by the standard length was indicated by micrometer ($\mu$m), which was defined as surface roughness (Ra). In addition, "average surface roughness" of the present invention means an average value obtained by measuring the aforementioned surface roughness (Ra) at 10 places arbitrarily selected on the surface of partition walls separating a plurality of cells from each other of a base for a honeycomb filter.

(2) Method for producing a base for a honeycomb filter

In a method for producing a base for a honeycomb filter of the present invention, at least aggregate particles and water are mixed and kneaded to obtain clay, which is formed in a honeycomb shape having a plurality of cells functioning as fluid passages and dried to obtain a honeycomb formed body, which is fired to obtain a base for a honeycomb filter.

The aggregate particles are particles serving as the main component constituting the base (sintered body). There is no particular limitation to kinds of the aggregate particles, and examples of the aggregate particles include cordierite, mullite, alumina, powder of potsherd, aluminum titanate, lithium aluminum silicate, silicon carbide, silicon nitride, and a mixture thereof.

In the production method of the present invention, it is necessary to use aggregate particles having 50% particle diameter ($D_{50}$) in the range from 50 to 70 $\mu$m. When 50% particle diameter ($D_{50}$) is below the range, since a resultant base has small pore diameters, flow-resistance of fluid is increased when fluid permeates through the inside of the base, which is not preferable in that fluid-permeation amount is reduced and treatment capacity is lowered.

On the other hand, when 50% particle diameter ($D_{50}$) is above the range, since a resultant base has large pore diameters, aggregate particles in slurry for forming film enter the pores or pass through the pores of the base, which is not preferable in that it causes increase in film-forming inferiorities such as a film defect. In addition, in the case that a method in which clay containing aggregate particles is extruded using an extrusion die having a shape complementary to a desired honeycomb structure (cell shape, thickness of partition walls, cell density, etc.) is employed as a method for forming a honeycomb formed body, clogging is prone to be caused in the portion corresponding to partition walls of a base (slit portion of the extrusion die) in the extrusion die. Therefore, an extruded honeycomb formed body has many defects, which is not preferable in that a yield of a honeycomb formed body is lowered.

In a production method of the present invention, besides the aggregate particles satisfying the above conditions, it is preferable that 50% particle diameter (D50) of the aggregate particles with thickness (W) of partition walls of the base for a honeycomb filter satisfies the following formula (3):

$$D_{50}/W \leq 0.12 \qquad\qquad (3)$$

By satisfying the relation of the above formula (3), it is possible to effectively inhibit deterioration in yield of a honeycomb formed body due to clogging in a slit portion of the above extrusion die. Incidentally, "partition walls" in the present invention mean the whole portion separating a plurality of cells from each other in a base and are not limited to ones in which portions separating a plurality of cells from each other have a uniform thickness. For example, when a base has a circle cell shape, a portion separating a plurality of cells from each other does not have a uniform thickness. However, such a portion is also included in "partition walls" of the present invention. Incidentally, when a portion separating a plurality of cells from each other does not have a uniform thickness, a definition of the above "thickness (W) of partition walls" seems a problem. However, thickness of the thinnest portion among the portions separating a plurality of cells from each other is defined as "thickness (W) of partition walls".

A characteristic of a production method of the present invention is the use of aggregate particles having a broader particle distribution in comparison with a conventional one. Since such aggregate particles contain a relatively large amount of particles having small particle diameters, partition walls of a base can have small average surface roughness. In such a method, pore diameter distribution of a base is also broad. However, unlike a filtration membrane, which is required to secure a function of securely removing impurities in fluid by having a predetermined pore diameter, a base is not required to have a sharp pore diameter distribution as long as it has small flow-resistance upon permeation of fluid inside the base, large fluid-permeation amount, and high treatment capacity. Therefore, it can be considered that it is not necessary to use aggregate particles having a sharp particle size distribution for the purpose of sharpening a pore diameter distribution of a base as a conventional production method.

To be concrete, there is used aggregate particles in which 50% particle diameter ($D_{50}$) with 25% particle diameter ($D_{25}$) and 75% particle diameter ($D_{75}$) satisfies the relation of the following formulae (1) and (2):

$$0.4 \leq D_{25}/D_{50} \qquad\qquad (1)$$

$$D_{75}/D_{50} \leq 1.4 \qquad\qquad (2)$$

When the above formula (1) is not satisfied, percentage of aggregate particles having small particle diameters is too high, and it is apprehended that a resultant base has small pore diameters. That is, in a base to be produced, flow-resistance is large when fluid passes inside the base, which is not preferable in that fluid-permeation amount decreases and treatment capacity is lowered. On the other hand, when the above formula (2) is not satisfied, it is not preferable in that it is apprehended that a yield of a honeycomb formed body is lowered due to the aforementioned clogging in a slit portion of an extrusion die.

Incidentally, "x% particle diameter ($D_x$)" of the present invention means a particle diameter measured by a sieving method, i.e., a particle diameter at the point where cumulative mass of powder meets x% of the whole mass on a particle size distribution curve given from a relation between a mesh diameter and mass of powder remaining on the sieve using a plurality of sieves having different normal mesh diameters. To be concrete, a plurality of sieves having different normal mesh diameters are piled up so that one having a larger mesh diameter locates upper, a powder sample to be measured for particle diameter was put in the uppermost sieve and shaken for 15 minutes with a shaker, a particle size distribution curve was prepared from a relation between mass of powder remaining on each sieve and a mesh diameter of the sieve, and a particle diameter at the point where cumulative mass of powder meets x% of the whole mass was defined as x% particle diameter ($D_x$). In this method for measurement, "50% particle diameter ($D_{50}$)" is a so-called average particle diameter.

Examples of the method for preparing aggregate particles having the aforementioned 50% particle diameter ($D_{50}$) and particle size distribution include a method using a commercial ceramic raw material which is left as it is or pulverized and classified and a method in which two or more kinds of such aggregate particles are suitably mixed so as to satisfy the aforementioned conditions.

As a production method of the present invention, there may be employed the same method as a conventional method for producing a base for a honeycomb filter except for the use of the aggregate particles as described above. In the first place, at least aggregate particles as described above and water are mixed and kneaded to give clay.

Incidentally, the clay may contain other additives, e.g., an organic binder, a dispersant, and an inorganic bonding material, as necessary besides the aggregate particles and water.

An organic binder is an additive which turns into gel in a formed body (clay) before firing and functions as a reinforcer for maintaining mechanical strength of the formed body. Therefore, there can suitably be used as the organic binder an organic polymer gellable in a formed body (clay), for example, hydroxypropylmethyl cellulose, methyl cellulose, hydroxyethyl cellulose, carboxymethyl cellulose, and poly(vinyl alcohol).

A dispersant is an additive for facilitating dispersion of aggregate particles in water as a dispersion medium. Examples of the dispersant include ethylene glycol, dextrin, fatty acid soap, and polyalcohol.

An inorganic bonding material is an additive for strengthening the bond among aggregate particles, and there may be used at least one kind selected from the group consisting of alumina, silica, zirconia, titania, glass frit, feldspar, and cordierite, having an average particle diameter of 10 μm or less. Though the inorganic bonding material is a ceramic particle, it is not included in "aggregate particles" of the present invention.

It is preferable to add 10 to 35 parts by mass of the inorganic bonding material with respect to 100 parts by mass of the aggregate particles. When it is below 10 parts by mass, it is not preferable in that strength of the base is lowered. When it is above 35 parts by mass, though strength is enhanced, the organic bonding material stays in a gap among the aggregate particles, and thereby pores inside the base are clogged to lower the fluid-permeation amount, which is not preferable.

Clay having appropriate viscosity can be prepared by mixing the above aggregate particles, water, organic binder, etc., and kneading the mixture with, for example, a vacuum pug mill. The clay is formed in a honeycomb shape and dried to obtain a honeycomb formed body.

As a forming method, a conventionally known forming method such as extrusion, injection, or press molding may be employed. Among them, there may suitably be employed a method of subjecting the clay prepared as described above to extrusion using an extrusion die having a shape complementary to a desired honeycomb structure (cell shape, thickness of partition walls, cell density, etc.). As a drying method, a conventionally know drying method such as hot air drying, microwave drying, dielectric drying, drying under reduced pressure, vacuum drying, or freeze drying may be employed. Among them, it is preferable to employ a method of hot air drying in combination with microwave drying or dielectric drying in that the whole honeycomb formed body can be dried rapidly and uniformly.

Finally, the honeycomb structure obtained as described above is fired to obtain a base for a honeycomb filter. Firing is an operation for securing a predetermined strength by sintering aggregate particles in the honeycomb formed body to densify the honeycomb formed body. Suitable firing conditions (temperature, time) may be selected according to kind of aggregate particles to be used. For example, when silicon carbide is used for aggregate particles, it is preferable to fire at 1300 to 2300°C for about one to five hours.

Incidentally, it is preferable to remove organic matter (organic binder, etc.) in the honeycomb formed body by combustion (calcination) before firing or in the temperature-rising process in that removal of organic matter can be facilitated. Though the calcination time is not particularly limited, it is generally about one to ten hours.


(3) Honeycomb Filter

A honeycomb filter of the present invention includes the aforementioned base for a honeycomb filter, an intermediate membrane formed on a surface of partition walls separating a plurality of cells of the base for a honeycomb filter and constituted by a porous body having smaller 50% pore diameter ($d_{50}$) than a ceramic porous body constituting the base, and a filtration membrane formed on a surface of the intermediate membrane and constituted by a porous body having smaller 50% pore diameter ($d_{50}$) than a porous body constituting the intermediate membrane. It is not necessary in such a honeycomb filter to thicken the intermediate layer because the aforementioned special structure of the base for a honeycomb filter inhibits generation of defects in a filtration membrane. Therefore, flow-resistance of fluid can be reduced in a portion of the intermediate membrane, and it is possible to enhance treatment capacity by increasing fluid-permeation amount of the filter.

A honeycomb filter of the present invention can be produced by forming an intermediate layer on a surface of partition walls in a base for a honeycomb filter by a conventionally known film-forming method and further forming a filtration membrane on a surface of the intermediate layer. For example, a film-forming slurry containing at least aggregate particles and water (further, an organic binder, a pH-adjusting agent, a surfactant, etc.) is applied on a surface of partition walls of the aforementioned base for a honeycomb filter to obtain a film-forming body, which is then dried and fired to form an intermediate membrane and a filtration membrane.

In addition, film-forming slurry may contain an inorganic bonding material for the same purpose as the case of producing a base. However, as an inorganic bonding material contained in a film-forming slurry, clay mineral, kaolin, titania sol, silica sol, glass frit, or the like, having an average diameter of 1 μm or less can be used unlike an inorganic bonding material contained in clay for formation, and it is preferable to add 5 to 20 parts by mass of an inorganic bonding material with respect to 100 parts by mass of aggregate particles from the viewpoint of securing film strength.

There is no particular limitation to kind of a film-forming method, and there may be employed, for example, a dipping film-forming method, a filtration membrane-forming method described in JP-B-63-66566. There may be used the same aggregate particles, organic binder, and the like, as those used in production of the base. However, since it is necessary to make 50% pore diameter ($D_{50}$) smaller in the order of the base, the intermediate membrane, and the filtration membrane, 50% pore diameter ($D_{50}$) of aggregate particles is generally made smaller in the order of the base, the intermediate membrane, and the filtration membrane.

Examples

Hereinbelow will be described a base for a honeycomb filter, a method for producing the base, and a honeycomb filter of the present invention more specifically with referring to Examples. However, a base for a honeycomb filter, a method for producing the base, and a honeycomb filter of the present invention are by no means limited to these Examples.

(Method for measuring physical properties and method for evaluation)

[25% particle diameter ($D_{25}$), 50% particle diameter ($D_{50}$), 75% particle diameter ($D_{75}$)]

A plurality of sieves having different normal mesh diameters are piled up so that one having a larger mesh diameter locates upper, a powder sample to be measured for particle diameter was put in the uppermost sieve and shaken for 15 minutes with a shaker, a particle size distribution curve was prepared from a relation between mass of powder remaining on each sieve and a mesh diameter of the sieve, and particle diameters at the point where cumulative mass of powder meets 25%, 50%, and 75% of the whole mass were defined as 25% particle diameter ($D_{25}$), 50% particle diameter ($D_{50}$), and 75% particle diameter ($D_{75}$), respectively. Incidentally, when an "average particle diameter" is simply referred to in the following Examples or Comparative Examples, it means "50% particle diameter ($D_{50}$)".

[Yield of formed body]

A yield of a formed body was defined from a percentage of the number of honeycomb formed bodies without any defect due to clogging in a slit portion of an extrusion die (i.e., passed article) with respect to 100 honeycomb formed bodies produced. Evaluations were made as good when the yield was above 90%, fair when it was 90% or less, and bad when it was 80% or less.

[Average surface roughness]

Average surface roughness was calculated from surface roughness (Ra) measured according to JIS B0601 "Surface Roughness - Definition and Indication". A standard length of a roughness curve was taken out in the direction of an average line, a surface roughness curve having the standard length was folded back based on the average line, and a value obtained by dividing an area surrounded by the surface roughness curve and the average line by the standard length was indicated by micrometer (μm), which was defined as surface roughness (Ra). The average value obtained by measuring the aforementioned surface roughness (Ra) at 10 places arbitrarily selected on the surface of partition walls separating a plurality of cells from each other of a base for a honeycomb filter was defined as the "average surface roughness".

[50% pore diameter ($d_{50}$)]

50% pore diameter ($d_{50}$) was measured by a method of mercury penetration. A sample having a predetermined shape was cut out from a base for a honeycomb filter or a honeycomb filter in Examples or Comparative Examples. Mercury was press-fitted into the sample with pressure being gradually raised, and a pore diameter d calculated based on the following formula (4) from a pressure P when a cumulative volume of mercury press-fitted into the porous body reached 50% of the volume of the whole pores of the porous body was defined as "50% pore diameter ($d_{50}$)".

$$d = -\gamma \times \cos \theta / P \qquad\qquad (4)$$

(where d represents pore diameter, γ represents surface tension at liquid-air interface, θ represents contact angle, and P represents pressure)

[Maximum pore diameter ($d_{max}$), Impurity-removing performance]

The maximum pore diameter ($d_{max}$) of a filtration membrane was measured according to an air flow method described in ASTM F316. A honeycomb filter of Examples or Comparative Examples is wetted by water having a temperature of 20°C, pressurized air was sent in with the pressure being gradually raised from inside a plurality of cells of the wetted honeycomb filter, a pore diameter d calculated based on the above formula (4) from the pressure P when an air bubble was observed in the first place on a peripheral surface of the honeycomb filter was defined as the maximum pore diameter ($d_{max}$). When the maximum pore diameter ($d_{max}$) was below 1.8 μm, no film defect was present, and evaluation was given as a filter having excellent impurity-removing performance. When the maximum pore diameter ($d_{max}$) was 1.8 μm or more, a film defect was present, and evaluation was given as a filter having insufficient impurity-removing performance.

[Average film thickness]

Average thickness of an intermediate membrane and a filtration membrane was calculated from film thickness measured by a measuring microscope. A honeycomb filter of Examples or Comparative Examples was cut at a face parallel to a cell opening end face. Along a direction of a diameter of the honeycomb filter, a film thickness of one row (44 cells) was measured, and an average of the measured values was defined as an average film thickness.

[Water-permeation amount, fluid-permeation amount (treatment capacity)]

A honeycomb filter of Examples or Comparative Examples was left in water for two hours under a reduced pressure of 6.7 kPa or less to remove air bubbles in the honeycomb filter. Then, pure water was sent inside a plurality of cells of the honeycomb filter and penetrated from inside the cells to the peripheral surface side of the honeycomb filter. Water-permeation amount per unit filtration area and unit hour was measured. When the water-permeation amount was 1.67 $m^3$/hr·$m^2$ or more, evaluation was given as a filter having large fluid-permeation amount and high treatment capacity. When the water-permeation amount was below 1.67 $m^3$/hr·$m^2$, evaluation was given as a filter having small fluid-permeation amount and insufficient treatment capacity.

(Example, Comparative Example)

[Base for a honeycomb filter and production method]

First, there were prepared aggregate particles shown in Table 1, glass frit having an average particle diameter of 3.5 μm as an inorganic bonding material, methyl cellulose as an organic binder, and polyethylene glycol as a dispersant. Then, the aggregate particles, the inorganic bonding material, water, the organic binder, and the dispersant were mixed at a mass ratio of 100 : 11.1 : 13.1 : 3.6 : 0.9 to give a mixture. The mixture was kneaded with a vacuum pug mill to obtain clay having adequate viscosity.

Table 1

| | Aggregate particles (base material) | | | | | | | Formed body | | Base | |
|---|---|---|---|---|---|---|---|---|---|---|---|
| | Material | $D_{50}$ (μm) | $D_{25}$ (μm) | $D_{25}/D_{50}$ | $D_{75}$ (μm) | $D_{75}/D_{50}$ | $D_{50}/W$ | Clogging upon forming | Yield (%) | $d_{50}$ (μm) | Average surface roughness (μm) |
| Comp. Ex. 1 | Alumina | 45 | 15 | 0.3 | 83 | 1.8 | 0.07 | Present | 87 | — | — |
| Comp. Ex. 2 | Alumina | 45 | 18 | 0.4 | 65 | 1.4 | 0.07 | None | 99 | 6.7 | 2.8 |
| Comp. Ex. 3 | Alumina | 45 | 22 | 0.5 | 60 | 1.3 | 0.07 | None | 98 | 7.1 | 2.9 |
| Comp. Ex. 4 | Alumina | 50 | 14 | 0.3 | 87 | 1.7 | 0.08 | Present | 82 | — | — |
| Example 1 | Alumina | 50 | 18 | 0.4 | 72 | 1.4 | 0.08 | None | 99 | 8.5 | 3.2 |
| Example 2 | Alumina | 50 | 22 | 0.4 | 68 | 1.4 | 0.08 | None | 98 | 8.8 | 3.3 |
| Comp. Ex. 5 | Alumina | 60 | 20 | 0.3 | 96 | 1.6 | 0.09 | Present | 85 | — | — |
| Comp. Ex. 6 | Alumina | 60 | 24 | 0.4 | 92 | 1.5 | 0.09 | Present | 88 | — | — |
| Example 3 | Alumina | 60 | 28 | 0.5 | 85 | 1.4 | 0.09 | None | 100 | 10.4 | 4.1 |
| Example 4 | Alumina | 60 | 35 | 0.6 | 84 | 1.4 | 0.09 | None | 100 | 11.2 | 4.5 |
| Comp. Ex. 7 | Alumina | 70 | 25 | 0.4 | 110 | 1.6 | 0.11 | Present | 84 | — | — |
| Example 5 | Alumina | 70 | 30 | 0.4 | 101 | 1.4 | 0.11 | None | 98 | 12.1 | 5.0 |
| Example 6 | Alumina | 70 | 38 | 0.5 | 99 | 1.4 | 0.11 | None | 100 | 12.4 | 5.1 |
| Example 7 | Alumina | 70 | 43 | 0.6 | 95 | 1.4 | 0.11 | None | 99 | 12.6 | 5.1 |
| Comp. Ex. 8 | Alumina | 75 | 25 | 0.3 | 113 | 1.5 | 0.12 | Present | 81 | — | — |
| Comp. Ex. 9 | Alumina | 75 | 30 | 0.4 | 105 | 1.4 | 0.12 | None | 98 | 14.2 | 5.8 |
| Comp. Ex. 10 | Alumina | 75 | 30 | 0.4 | 105 | 1.4 | 0.12 | None | 100 | 14.2 | 5.8 |
| Comp. Ex. 11 | Alumina | 75 | 36 | 0.5 | 97 | 1.3 | 0.12 | None | 98 | 14.6 | 5.9 |
| Comp. Ex. 12 | Alumina | 75 | 36 | 0.5 | 97 | 1.3 | 0.12 | None | 100 | 14.6 | 5.9 |
| Comp. Ex. 13 | Alumina | 85 | 32 | 0.4 | 112 | 1.4 | 0.13 | Present | 75 | — | — |
| Comp. Ex. 14 | Alumina | 90 | 36 | 0.4 | 126 | 1.4 | 0.14 | Present | 70 | — | — |

The above clay was subjected to extrusion in a honeycomb shape having a plurality of cells separated from each other by partition walls and to function as passages for fluid with a conventionally known extruder having an extrusion die having a shape complementary to a desired honeycomb structure (the whole shape, cell shape, and thickness of partition walls) and dried with hot air at 100°C for 48 hours to obtain a honeycomb formed body. The honeycomb formed body was fired at 1300°C for two hours in an electric furnace to obtain a base for a honeycomb filter (hereinbelow referred to simply as "base").

The whole shape of the base obtained as above is cylindrical having a circle end face (cell opening face) having an outer diameter of 180 mm and a length of 1000 mm, with a cell shape of a hexagon whose inscribed circle has a diameter of 2.5 mm, a thickness (W) of partition walls of 650 $\mu$m, and the total number of 2000 cells. With regard to these bases, average surface roughness of partition walls is evaluated, and the results are shown in Table 1.

[ Results ]

As shown in Table 1, with regard to Examples 1 to 7 where 50% particle diameter ($D_{50}$), $D_{25}/D_{50}$, and $D_{75}/D_{50}$ of aggregate particles which is a raw material for the base was specified to be within the range of a production method of the present invention, bases each having 50% pore diameter ($d_{50}$) of 8.5 to 13 $\mu$m and an average surface roughness of partition walls of 3.0 to 5.5 $\mu$m, and good results were shown. In addition, a yield of a honeycomb formed body greatly exceeded 90%. Thus, no problem was caused.

In Comparison Example 1 to 3, where 50% particle diameter ($D_{50}$) of aggregate particles is below the range of a production method of the present invention, a base obtained had 50% pore diameter ($d_{50}$) of below 8.5 $\mu$m, and it was expected that flow-resistance is large when fluid pass through the inside of the base. That is, it was expected that the finally obtained honeycomb filter would have a reduced fluid-permeation amount and lowered treatment capacity.

In Comparison Example 8 to 14, where 50% particle diameter ($D_{50}$) of aggregate particles is above the range of a production method of the present invention, a base obtained had 50% pore diameter ($d_{50}$) of above 13 $\mu$m, and it was expected that film-forming inferiorities such as film defects would increase when an intermediate membrane or a filtration membrane is formed. Among them, clogging was caused in a slit portion of an extrusion die upon extrusion forming of a base in Comparative Example 8. Therefore, an extruded honeycomb formed body had many defects, and a yield of the honeycomb formed body was lowered to 90% or less. Further, with regard to Comparative Examples 13 and 14, where a value of 50% particle diameter ($D_{50}$) /thickness (W) of partition walls exceeded the range of a production method of the present invention, a yield of a honeycomb formed body was as remarkably low as 80% or less. Further, in Comparative Examples 1, 4 to 7, where a value of $D_{75}/D_{50}$ exceeds the range of a production method of the present invention, clogging was caused in a slit portion of an extrusion die when a base is subjected to extrusion forming. Therefore, an extruded honeycomb formed body had many defects, and a yield of the honeycomb formed body was lowered to 90% or less.

[Honeycomb filter]

On the above base were formed an intermediate membrane and a filtration membrane by the following method to obtain a honeycomb filter.

First, there were prepared alumina particles having an average particle diameter of 3.2 $\mu$m as aggregate particles, glass frit having an average diameter of 0.9 $\mu$m as an inorganic bonding material, methyl cellulose as an organic binder, and polycarboxylate as a dispersant. Then, the aggregate particles, inorganic bonding materials, water, organic binder, and dispersant were mixed at a mass ratio of 100 : 20 : 400 : 0.5 : 2.0 to prepare slurry for film formation (for an intermediate membrane).

There were also prepared alumina particles of an average particle diameter of 0.4 $\mu$m as aggregate particles, methyl cellulose as an organic binder, and polycarboxylate as a dispersant. Then, the aggregate particles, water, organic binder, and dispersant were mixed at a mass ratio of 100 : 1000 : 4.0 : 0.2 to prepare slurry for film formation (for a filtration membrane).

Then, the above slurry for film formation (for an intermediate membrane) was applied on a surface of partition walls of the above base using a filtration membrane-forming method described in JP-B-63-66566 to obtain a film-formed body, which was subjected to hot air drying at 100°C for two hours and then fired at 1350°C for two hours in an electric furnace to form an intermediate membrane.

Further, the above slurry for film formation (for a filtration membrane) was applied on a surface of the intermediate membrane formed on partition walls of the above base using a filtration membrane-forming method described in JP-B-63-66566 to obtain a film-formed body, which was subjected to hot air drying at 100°C for 24 hours and then fired at 1300°C for two hours in an electric furnace to form a filtration membrane. Thus, a honeycomb filter (hereinbelow referred to simply as "filter") was obtained.

The filter obtained as described above had an intermediate membrane and a filtration membrane, each having an average thickness and 50% pore diameter ($d_{50}$) shown in Table 2. Evaluation was made for the maximum pore diameter ($d_{max}$) and a water-permeation amount of these filters. The results are shown in Table 2.

Table 2

| | Base | | Intermediate membrane | | Filtration membrane | | | Filter |
|---|---|---|---|---|---|---|---|---|
| | $d_{50}(\mu m)$ | Average surface roughness ($\mu m$) | Average film thickness ($\mu m$) | $d_{50}(\mu m)$ | Average film thickness ($\mu m$) | $d_{50}(\mu m)$ | $d_{max}(\mu m)$ | Water-permeation amount ($m^3/hr \cdot m^2$) |
| Comp. Ex. 1 | — | — | — | — | — | — | — | — |
| Comp. Ex. 2 | 6.7 | 2.8 | 122 | 3.6 | 12 | 0.7 | <1.8 | 1.61 |
| Comp. Ex. 3 | 7.1 | 2.9 | 120 | 3.6 | 10 | 0.7 | <1.8 | 1.62 |
| Comp. Ex. 4 | — | — | — | — | — | — | — | — |
| Example 1 | 8.5 | 3.2 | 119 | 3.6 | 11 | 0.7 | <1.8 | 1.82 |
| Example 2 | 8.8 | 3.3 | 121 | 3.6 | 10 | 0.7 | <1.8 | 1.89 |
| Comp. Ex. 5 | — | — | — | — | — | — | — | — |
| Comp. Ex. 6 | — | — | — | — | — | — | — | — |
| Example 3 | 10.4 | 4.1 | 122 | 3.6 | 11 | 0.7 | <1.8 | 2.04 |
| Example 4 | 11.2 | 4.5 | 120 | 3.6 | 10 | 0.7 | <1.8 | 2.15 |
| Comp. Ex 7 | — | — | — | — | — | — | — | — |
| Example 5 | 12.1 | 5.0 | 121 | 3.6 | 11 | 0.7 | <1.8 | 2.26 |
| Example 6 | 12.4 | 5.1 | 199 | 3.6 | 10 | 0.7 | <1.8 | 2.46 |
| Example 7 | 12.6 | 5.1 | 120 | 3.6 | 11 | 0.7 | <1.8 | 2.49 |
| Comp. Ex. 8 | — | — | — | — | — | — | — | — |
| Comp. Ex. 9 | 14.2 | 5.8 | 122 | 3.6 | 10 | 0.7 | 5.4 | 2.51 |
| Comp. Ex. 10 | 14.2 | 5.8 | 160 | 3.6 | 11 | 0.7 | <1.8 | 1.51 |
| Comp. Ex. 11 | 14.6 | 5.9 | 121 | 3.6 | 11 | 0.7 | 6.7 | 2.54 |
| Comp. Ex. 12 | 14.6 | 5.9 | 164 | 3.6 | 12 | 0.7 | <1.8 | 1.46 |
| Comp. Ex. 13 | — | — | — | — | — | — | — | — |
| Comp. Ex. 14 | — | — | — | — | — | — | — | — |

(Results)

As shown in Table 2, each of the filters in Examples 1 to 7 using a base having 50% pore diameter ($d_{50}$) and an average surface roughness of partition walls within the range of the present invention had a water-permeation amount of 1.67 $m^3$/hr·$m^2$ or more and the maximum pore diameter of a filtration membrane below 1.8 μm. Thus, good results were shown with regard to removability of impurities and fluid-permeation amount (i.e., treatment capacity).

In addition, since each of the filters in Comparative Examples 2 and 3 using a base having 50% pore diameter ($d_{50}$) below the range of the present invention has large flow-resistance when fluid permeates inside the base, the water-permeation amount was below 1.67 $m^3$/hr·$m^2$. That is, fluid-permeation amount was reduced, and treatment capacity was lowered.

Further, each of the filters in Comparative Examples 9 to 12 using a base having an average surface roughness of partition walls exceeding the range of the present invention had a base having partition walls whose surface was course and has large unevenness, when an intermediate membrane is made thin as the filters in Comparative Examples 9 and 11, a film defect was caused in a filtration membrane. That is, the maximum pore diameter ($d_{max}$) of the filtration membrane became 1.8 μm or more, and removability of impurities was insufficient. In order to avoid such a situation, it is necessary to make the intermediate layer thick as the filters in Comparative Examples 10 and 12. However, such a filter has large flow-resistance of fluid in the intermediate membrane portion. That is, each of the filters in Comparative Examples 10 and 12 had a water-permeation amount below 1.67 $m^3$/hr·$m^2$, i.e., a small fluid-permeation amount and lowered treatment capacity.

Industrial Applicability

As described above, Since a base for a honeycomb filter of the present invention has a relatively smooth and flat surface of partition walls and small unevenness, upon forming an intermediate membrane, filling up of unevenness of partition walls is not necessary, and even if the intermediate layer is thin, the surface can be made flat and smooth. This means that the total thickness of the filtration membrane and the intermediate membrane can be reduced with inhibiting generation of a defect of a filtration membrane, which enables to reduce flow-resistance of fluid in this portion. That is, a base for a honeycomb filter of the invention can suitably be used for producing a honeycomb filter having excellent removability of impurities, large fluid-permeation amount, and high treatment capacity.

**Claims**

**1.** A base for a honeycomb filter comprising:

a ceramic porous body having a number of fine pores, and
a plurality of cells separated from each other by partition walls, the cells functioning as fluid passages;

wherein 50% pore diameter ($d_{50}$) of said ceramic porous body is within the range from 8.5 to 13 μm, and the partition walls separating the plurality of cells have an average surface roughness of 3.0 to 5.5 μm,
where "50% pore diameter ($d_{50}$)" is a pore diameter measured by a method of mercury penetration and calculated from a pressure when a cumulative volume of mercury press-fitted into the porous body is 50% of the volume of the whole pores of the porous body.

**2.** A method for producing a base for a honeycomb filter, comprising the steps of:

mixing and kneading aggregate particles and water to obtain clay,
forming the clay in a honeycomb shape having a plurality of cells separated from each other by partition walls, the cells functioning as fluid passages,
drying the clay in a honeycomb shape to obtain a honeycomb formed body, and
firing the honeycomb formed body to obtain the base for the honeycomb filter;

wherein 50% particle diameter ($D_{50}$) of the aggregate particles is within the range of 50 to 70 μm, and the 50% particle diameter ($D_{50}$) with 25% particle diameter ($D_{25}$) and 75% particle diameter ($D_{75}$) satisfies the relation of the following formulae (1) and (2):

$$0.4 \leq D_{25}/D_{50} \tag{1}$$

$$D_{75}/D_{50} \leq 1.4 \tag{2}$$

where "x% particle diameter ($D_x$)" is a particle diameter measured by a sieving method, the particle diameter being at the point where cumulative mass of powder meets x% of the whole mass on a particle size distribution curve given from a relation between a mesh diameter and mass of powder remaining on the sieve using a plurality of sieves having different normal mesh diameters.

3. A method for producing a base for a honeycomb filter according to Claim 2, wherein the 50% particle diameter ($D_{50}$) of the aggregate particles with thickness (W) of the partition walls of the base for the honeycomb filter satisfies the following formula (3):

$$D_{50}/W \leq 0.12 \tag{3}$$

4. A honeycomb filter comprising:

   a base for the honeycomb filter according to Claim 1,
   an intermediate membrane comprising a porous body having smaller 50% pore diameter ($d_{50}$) than the ceramic porous body constituting said base, the intermediate membrane being formed on a surface of the partition walls separating the plurality of cells from each other of the base for the honeycomb filter, and
   a filtration membrane comprising a porous body having smaller 50% pore diameter ($d_{50}$) than the porous body constituting the intermediate membrane, the filtration membrane being formed on a surface of the intermediate membrane.

FIG.1

FIG.2

<table>
<tr><td colspan="2"><strong>INTERNATIONAL SEARCH REPORT</strong></td><td>International application No.<br>PCT/JP2004/001464</td></tr>
</table>

**A. CLASSIFICATION OF SUBJECT MATTER**
Int.Cl$^7$ B01D39/20, C04B38/00

According to International Patent Classification (IPC) or to both national classification and IPC

**B. FIELDS SEARCHED**

Minimum documentation searched (classification system followed by classification symbols)
Int.Cl$^7$ B01D39/20, C04B38/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| A | JP 2002-326034 A (NGK Insulators, Ltd.),<br>12 November, 2002 (12.11.02),<br>Claims; page 9, Par. Nos. [0047] to page 10, Par.<br>No. [0050]<br>& WO 2002/089980 A1 | 1,4 |
| A | JP 8-000931 A (NGK Insulators, Ltd.),<br>09 January, 1996 (09.01.96),<br>Claims; page 2, Par. No. [0008] to page 5, Par.<br>No. [0033]<br>& US 5634952 A | 1,4 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 April, 2004 (21.04.04) | Date of mailing of the international search report<br>18 May, 2004 (18.05.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/001464 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-279729 A   (Ibiden Co., Ltd.),<br>10 October, 2000 (10.10.00),<br>Claims; page 5, Par. No. [0043] to page 7, Par.<br>No. [0063]<br>(Family: none) | 1,4 |
| A | JP 10-52618 A   (Denki Kagaku Kogyo Kabushiki<br>Kaisha),<br>24 February, 1998 (24.02.98),<br>Claims; page 7, Par. Nos. [0045] to page 8, Par.<br>No. [0053]<br>& US 5733352 A          & EP 761279 A2 | 1,4 |
| A | JP 2003-1029 A   (Hitachi Metals, Ltd.),<br>07 January, 2003 (07.01.03),<br>Claims; page 3, Par. Nos. [0018] to page 4, Par.<br>No. [0028]<br>(Family: none) | 1,4 |
| X<br>A | JP 2001-340718 A   (NGK Insulators, Ltd.),<br>11 December, 2001 (11.12.01),<br>Claims; page 3, Par. No. [0016] to page 9, Par.<br>No. [0065]<br>(Family: none) | 2<br>3 |
| A | JP 2001-79321 A   (NGK Insulators, Ltd.),<br>27 March, 2001 (27.03.01),<br>Claims; page 3, Par. No. [0012] to page 4,<br>Par. No. [0026]<br>(Family: none) | 2,3 |

Form PCT/ISA/210 (continuation of second sheet) (January 2004)